# EUROPÄISCHE PATENTSCHRIFT

(11) **EP 0 483 811 B1**
(45) Veröffentlichungstag und Bekanntmachung des Hinweises auf die Patenterteilung: **05.01.1994**
(21) Anmeldenummer: 91118541.1
(22) Anmeldetag: 30.10.1991
(51) Int. Cl.: G01D 13/04, G04B 19/00

(54) **Armbanduhr**
Wrist watch
Montre-bracelet

(30) Priorität: 31.10.1990 DE 9015030 U
(43) Veröffentlichungstag der Anmeldung: 06.05.1992
(73) Patentinhaber: Siebrasse, Christoph R., 53173 Bonn (DE); Edler von Braun, Friedrich, 53173 Bonn (DE)
(72) Erfinder: Siebrasse, Christoph R., D-53173 Bonn (DE)
(74) Vertreter: Kurig, Thomas, Dipl.-Phys.

(56) Entgegenhaltungen:
- DE-A- 2 023 161
- DE-A- 2 416 884
- DE-A- 2 446 972
- FR-A- 0 640 401
- US-A- 4 184 446
- US-A- 4 184 447

## Beschreibung

Die vorliegende Erfindung betrifft eine Armbanduhr mit Skala entsprechend dem Oberbegriff von Anspruch 1.

Es sind bereits Armbanduhren in runder Form bekannt, bei denen ein umlaufender Zeiger die anzuzeigenden Werte markiert. Ferner sind digitale Armbanduhren bekannt, bei denen der anzuzeigende Wert durch eine Ziffernfolge dargestellt ist. Außerdem sind aus der FR-A-640 401 Pendel- oder großuhren bzw. Wecker mit Linearer Anzeige bekannt, wobei Zeiger vorgesehen since, welche durch eine aufwendige Mechanik verschoben werden.

Es hat sich herausgestellt, daß eine Anzeige in Form einer analogen Zeigereinrichtung gegenüber der genannten Zifferneinrichtung in Armbanduhren den Vorteil hat, daß sie von dem Benutzer unmittelbar visuell aufgenommen wird. Die analogen Zeigereinrichtungen in Form eines umlaufenden Zeigers haben jedoch den Nachteil, daß zur unmittelbaren visuellen Wahrnehmung des angezeigten Wertes ein im wesentlichen rundes Ziffernblatt gewählt werden muß.

Aufgabe der vorliegenden Erfindung ist es daher, eine Armbanduhr anzugeben, welche die Vorteile einer analogen visuellen Anzeige besitzt, wobei der Anzeigewert auch bei Skalen mit kleineren Abmessungen bequem abgelesen werden kann.

Diese Aufgabe wird gelöst durch die Armbanduhr nach Anspruch 1.

Bevorzugte Ausführungsformen sind in den abhängigen Ansprüchen angegeben.

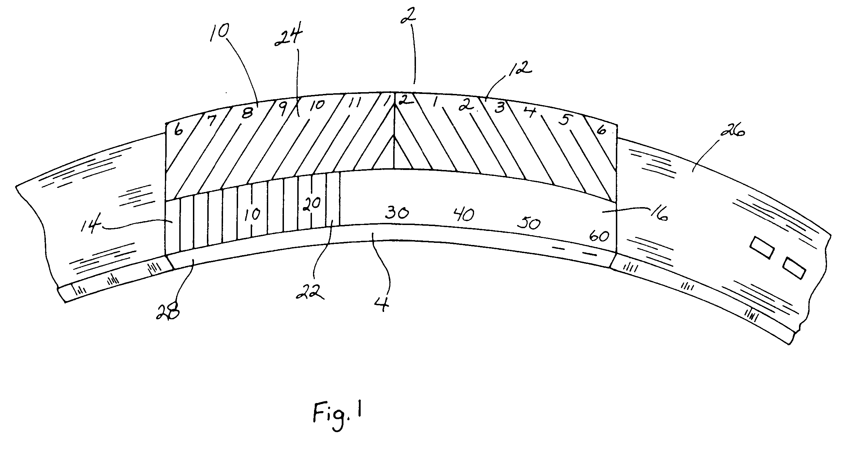

Fig. 1 zeigt eine erfindungsgemäße Armbanduhr mit linearer Skala und einer Zeigereinrichtung in Form segmentierter Zeigerflächen.

Die in Fig. 1 gezeigte Ausführungsform der erfindungsgemäßen Armbanduhr weist ein Armband 26 und ein daran befestigtes Uhrengehäuse 28 auf. Das Armband 26 und das Gehäuse 28 sind integriert miteinander verbunden, so daß optisch das Gehäuse 28 eine Fortsetzung des Armbandes 26 bildet.

Das Gehäuse 28 weist eine oben gelegene Stundenskala 2 und eine getrennte unterhalb gelegene Minutenskala 4 auf. Die obere Stundenskala 2 wird gebildet durch gleichmäßig beabstandete Stundenziffern beginnend mit 6, 7, 8, 9, 10, 11, 12, 1, 2, 3, 4, 5 bis 6. Diese stellen die Stunden von 6 Uhr morgens bis 18 Uhr abends dar. Der Stundenskala 2 korrespondierend ist eine unmittelbar neben den Skalenziffern angeordnete Zeigerfläche vorgesehen, die eine im wesentlichen lineare, leicht gewölbte rechteckige Form hat. Die Zeigerfläche besteht aus der Anzeigefläche 10 und der Grundfläche 12 für die Stundenanzeige. Die Grundfläche 12 ist über die gesamte Breite der Zeigerfläche erstreckt und als einfarbige Untergrundfläche ausgebildet. Die Grundfläche 12 wird überdeckt von einer andersfarbigen Anzeigefläche 10, die sich über einen beliebigen Bereich der Grundfläche 12 erstreckt. Die Anzeigefläche 10 ist in Form schmaler, schräg oder rechtwinklig zur Skalierung verlaufender Segmente 24 ausgebildet, die eine zusammenhängende Anzeigefläche 10 bilden. Die Form der Segmente 24 kann, wie in Fig. 1 gezeigt, trapezförmig sein. Es ist aber auch eine rechtwinklig zur Skalierung erstreckte Form möglich, wie sie im Falle der in Fig. 1 gezeigten Segmente 22 vorliegt. Die stündlich wachsende Anzeigefläche 10 wächst von 6 Uhr morgens bis 12 Uhr mittags, wo sie die Hälfte der Zeigerfläche ausfüllt und wächst weiter bis 18 Uhr = 6 Uhr abends, wo sie die gesamte Zeigerfläche der Stundenanzeige ausfüllt. Von 6 Uhr abends an nimmt die durch die Segmente 24 gebildete Anzeigefläche 10 von 6 Uhr links beginnend wieder ab, was durch Ausschalten der Segmente erreicht wird. Dadurch kommt die Grundfläche 12 wieder zum Vorschein und die wandernde Grenzfläche zwischen der freigegebenen Grundfläche 12 und der sich zurückziehenden Anzeigefläche 10 bildet die den Anzeigewert auf der Skala darstellende Markierung.

Unterhalb der Zeigerfläche für die Stunden befindet sich eine entsprechende Zeigerfläche für die Minuten mit einer Minutenskala 4. Auch die Zeigerfläche für die Minuten besteht aus einer Grundfläche 16 in Form einer einfarbigen Untergrundfarbe und einer Anzeigefläche 14 in Form paralleler rechteckiger segmentierter Lamellen 22. Die Lamellen 22 sind so schmal ausgebildet, daß sie auch eine Sekundenanzeige ermöglichen, die in die Minutenanzeige integriert ist. Nach Ablauf jeder Zeiteinheit wird ein Segment zugeschaltet, so daß die Anzeigefläche 14 im Verlauf der Zeit von 0 Minuten auf 60 Minuten wachsend die gesamte Zeigerfläche für die Minuten überdeckt, so daß die Grundfläche 16 verschwindet. Nach Erreichen des Skalenpunktes für 60 Minuten werden alle Segmente abgeschaltet, so daß die Anzeigefläche 14 verschwindet. Danach beginnt die Anzeigefläche 14 von neuem zu laufen.

Die Segmente bestehen aus LED's oder LCD's oder einem beliebigen anderen bekannten Flächendisplay. Die Segmente werden von einem in dem Gehäuse 28 untergebrachten gesteuerten Impulsgeber zu- und abgeschaltet. Der Impulsgeber weist eine geeignete Quarzsteuerung auf, die für eine präzise Synchronisierung sorgt.

Alternativ können die Segmente 22 bzw. 24 so schmal ausgebildet sein, daß eine quasi kontinuierliche Anzeige erscheint.

In einer weiteren Ausführungsform der Erfindung ist eine Zeigereinrichtung in Form eines umlaufenden farbigen Bandes vorgesehen, das an zwei beabstandeten Umlenkrollen gehalten wird. Das Band hat im wesentlichen die Breite des Gehäuses und ist in einem Teil mit einer Farbe gefärbt und in einem anderen Teil mit einer anderen Farbe. Die Grenzlinie zwischen den beiden Farben markiert den anzuzeigenden Wert. Auf einem das Band einfassenden Gehäuse sind beidseitig Skalenmarken einer Zeitskala angebracht, die von 6.00 a.m. bis 6.00 p.m. läuft. Die Skalenmarken können dabei bevorzugt so auf die beiden Ränder verteilt werden, daß die Skalenmarken für 6.00, 12.00, 6.00 auf der einen Seite angebracht sind, während die Skalenmarken für 9.00 und 3.00 auf der anderen Seite des Gehäuses in arabischen Ziffern angebracht sind. Die dazwischenliegenden Werte werden durch kleine Skalenstriche markiert.

Alternativ ist, wie oben aufgeführt, ein Anzeigedisplay in Form eines LCD-Moduls vorgesehen, das eine Anzahl von X * Y Pixel aufweist. Die Pixel werden einzeln oder segmentweise von einem Steuergerät angesteuert, so daß jedes Segment zu- bzw. abgeschaltet werden kann.

Bei dem LCD-Modul kann es sich um ein herkömmliches passives Modul handeln, das von einer externen Treiberelektronik angesteuert wird. Es kann sich alternativ aber auch um ein aktives LCD-Modul handeln, dessen Flüssigkristall-Zellen direkt mit Dünnfilm-Transistoren verbunden sind. Auf diese Weise ist es möglich, anstelle eines einschichtigen Displays ein mehrschichtiges Display mit unterschiedlichen dazwischen gelagerten Farbfiltern anzugeben.

Die in der vorliegenden Erfindung verwendbaren LCD-Module können verschiedenartig aufgebaut sein. Zum einen kann ein Modul zwei Polarisierungsplatten und ein dazwischen gelagertes LCD-Material vom homöotropischen Ausrichtungstyp aufweisen. Die vertikale Orientierung der Moleküle des LCD-Materials wird verändert, wenn eine Spannung über das LCD-Material angelegt wird. Die Farbe wird erzeugt durch die Doppelbrechung des LCD-Materials aufgrund der Änderung der Orientierung der LCD-Moleküle.

Ein anderer Weg ist die Verwendung des sogenannten "Guest-Host"-Effektes, wo Farbträger in das LCD-Material eingebracht werden und die Farbe dadurch erzeugt wird, daß der Farbträger Licht einer gegebenen Wellenlänge absorbiert. Ein weiteres Verfahren verwendet den "twisted nematic"-Effekt, bei dem farbige Polarisierungsplatten verwendet werden.

In einer bevorzugten Ausführungsform des LCD-Moduls gemäß der vorliegenden Erfindung ist eine erste LCD-Zelle mit einer darüber gelagerten zweiten LCD-Zelle vorgesehen, wobei jede Zelle eine Schicht LCD-Material aufweist, die zwischen zwei Elektroden zum Anlegen eines elektrischen Feldes an die Schicht angeordnet ist, wobei die Schicht der ersten Zelle umschaltbar ist zur Einstellung eines optischen Drehwinkels von etwa 90° oder etwa 0°. Die Schicht der zweiten Zelle hat positive dielektrische Anisotropie und eine parallele homogene Ausrichtung in Abwesenheit eines elektrischen Feldes. Die Schicht der zweiten Zelle enthält eine dichroitische Farbe, deren Moleküle mit den Molekülen des LCD-Materials gemeinsam orientiert werden. Ferner weist das LCD-Modul eine Polarisierungseinrichtung zum Polarisieren von auf die Zelle einfallendem Licht auf und eine Filtereinrichtung mit einem optischen Element, das eine lineare Polarisierungseigenschaft aufweist. Die zweite Zelle ist sandwichartig zwischen der ersten Zelle und der Filtereinrichtung zwischengelagert. In einer bevorzugten Ausführungsform ist die Filtereinrichtung eine farbige Polarisierungsplatte. In einer weiteren Ausführungsform weist die Filtereinrichtung wenigstens eine weitere LCD-Zelle auf, die ein LCD-Material und einen Farbträger enthält. Eine LCD-Einheit kann alternativ eine erste transparente Platte, vorzugsweise aus Glas, und eine zweite transparente Platte, ebenfalls aus Glas und parallel zur ersten Platte erstreckt aufweisen. Der Raum zwischen den zwei Platten ist mit einer Schicht aus LCD-Material gefüllt.

Eine alternative LCD-Vorrichtung weist eine LCD-Zelle auf, die in der Lage ist, die Polarisationsebene des Lichtes zu drehen. Ferner weist sie eine Schicht aus Doppelbrechungsmaterial auf, die parallel zur Zelle angeordnet ist, einen Polarisierer, der ebenfalls parallel zur Zelle angeordnet ist und eine Einrichtung zum Anlegen einer variablen Spannung über die Flüssigkeitszelle. Das Doppelbrechungsmaterial kann aus einer oder mehreren Schichten Zellulose-Film, Polyvinylalkohol-Film oder polyvinylfluorid-Film bestehen.

Erfindungsgemäß kann eine LCD-Zelle zusammen mit einer spezifischen Filtereinrichtung eine Farbe aufweisen, während eine darübergelegene LCD-Zelle zusammen mit einem spezifischen Filter eine andere Farbe aufweist. Auf diese Weise können mehrere Farbebenen hintereinander angeordnet werden, so daß nach außen eine einheitliche zweifarbige Anzeigefläche erscheint. Die Schichten können auch Dünnfilmschichten sein.

## Patentansprüche

1. Armbanduhr mit einem an einem Armband (26) befestigten Gehäuse (28), in dem eine mit einer Stundenskala (2) versehene Stundenanzeige (10, 12) und eine mit einer Minutenskala (4) versehene Minutenanzeige (14, 16) angeordnet sind, dadurch gekennzeichnet, daß die Stundenanzeige durch eine im wesentlichen geradlinig wachsende Stundenzeigerfläche (10, 12) gebildet ist, daß die Minutenanzeige durch eine im wesentlichen geradlinig wachsende Minutenzeigerfläche (14, 16) gebildet ist, daß die Stundenzeigerfläche (10, 12) und die Minutenzeigerfläche (14, 16) parallel nebeneinander angeordnet sind, und daß das Gehäuse (28) in Längsrichtung der Zeigerflächen (10, 12, 14, 16) langgestreckt ausgebildet ist, so daß es optisch eine Fortsetzung des Armbandes (26) bildet.

2. Armbanduhr nach Anspruch 1, dadurch gekennzeichnet, daß die Zeigerflächen (10, 12, 14, 16) durch Segmente (22, 24) einer Flüssigkristallanzeige gebildet sind, wobei die Segmente (22, 24) durch einen quarzgesteuerten Impulsgeber zuschaltbar sind.

3. Armbanduhr nach Anspruch 2, dadurch gekennzeichnet, daß ein Segment (24) der Stundenzeigerfläche (10, 12) einer abgelaufenen vollen Stunde der Stundenskala (2) entspricht.

4. Armbanduhr nach einem der Ansprüche 1 bis 3, dadurch gekennzeichnet, daß die Stundenskala (2) Skalenwerte von 6.00 a.m. bis 6.00 p.m. aufweist.

## Claims

1. Wrist-watch having a housing (28) which is fastened to a wrist strap (26) and in which there are arranged an hour display (10, 12) provided with an hour scale (2) and a minute display (14, 16) provided with a minute scale (4), characterized in that the hour display is formed by an essentially rectilinearly increasing hour display surface (10, 12), in that the minute display is formed by an essentially rectilinearly increasing display surface (14, 16), in that the hour display surface (10, 12) and the minute display surface (14, 16) are arranged parallel next to one another, and in that the housing (28) is constructed in an elongated fashion in the longitudinal direction of the display surfaces (10, 12, 14, 16), so that optically it forms a continuation of the wrist strap (26).

2. Wrist-watch according to Claim 1, characterized in that the display surfaces (10, 12, 14, 16) are formed by segments (22, 24) of a liquid-crystal display, it being possible to turn on the segments (22, 24) by means of a quartz-controlled pulse generator.

3. Wrist-watch according to Claim 2, characterized in that a segment (24) of the hour display surface (10, 12) corresponds to a complete expired hour of the hour scale (2).

4. Wrist-watch according to one of Claims 1 to 3, characterized in that the hour scale (2) has scale values from 6.00 a.m. to 6.00 p.m.

## Revendications

1. Montre-bracelet avec un boîtier (28) fixé à un bracelet (26), dans lequel sont disposés un indicateur horaire (10, 12) avec une échelle des heures (2) et un indicateur de minutes (14, 16), avec une échelle des minutes,
caractérisé en ce que l'indicateur horaire est constitué d'une surface d'affichage horaire croissante de façon essentiellement rectiligne (10, 12), en ce que l'indicateur de minutes est constitué d'une surface d'affichage de minutes croissante de façon essentiellement rectiligne (14, 16), en ce que l'indicateur des minutes et l'indicateur des heures sont juxtaposés parallèlement et en ce que le boîtier (28) est développé en longueur selon la longueur des indicateurs (10, 12, 14, 16), de sorte qu'il constitue optiquement un prolongement du bracelet (26).

2. Montre-bracelet selon la revendication 1, caractérisé en ce que les surfaces d'indication (10, 12, 14, 16) sont constituées de segments d'un affichage à cristaux liquides, les segments (22, 24) étant commandés par un générateur d'impulsions à quarz.

3. Montre-bracelet selon la revendication 2, caractérisée en ce qu'un segment (24) de la surface d'indicateur horaire correspond à une heure pleine de l'échelle des heures (2).

4. Montre-bracelet selon les revendications 1 à 3, caractérisé en ce que l'échelle des heures (2) indique des valeurs allant de 6 heures du matin à 6 heures du soir.
